# EUROPÄISCHE PATENTSCHRIFT

(11) **EP 1 159 104 B1**
(45) Veröffentlichungstag und Bekanntmachung des Hinweises auf die Patenterteilung: **11.08.2004**
(21) Anmeldenummer: 00918675.0
(22) Anmeldetag: 25.02.2000
(51) Int. Cl.: B23K 26/18, B23K 26/00

(54) **ABSCHIRMUNG GEGEN LASERSTRAHLEN**
SHIELDING AGAINST LASER BEAMS
ECRAN DE PROTECTION CONTRE DES RAYONS LASER

(30) Priorität: 27.02.1999 DE 19908630
(43) Veröffentlichungstag der Anmeldung: 05.12.2001
(73) Patentinhaber: ROBERT BOSCH GMBH, 70442 Stuttgart (DE)
(72) Erfinder: BENZ, Gerhard, D-71032 Böblingen (DE); WAWRA, Thomas, D-89558 Boehmenkirck (DE); SCHNEIDER, Rainer, D-31171 Schellerten/Mahlerten (DE); MOLINE, Michel, F-12440 Luc (FR); EISEMANN, Achim, D-74196 Neuenstadt (DE)
(86) Internationale Anmeldenummer: PCT/DE2000/000531
(87) Internationale Veröffentlichungsnummer: WO 2000/051778

(56) Entgegenhaltungen:
- EP-A- 0 347 053
- EP-A- 0 454 223
- EP-A- 0 750 964
- FR-A- 2 482 495
- US-A- 5 222 617
- US-A- 5 516 998

## Beschreibung

### Stand der Technik

Die Erfindung betrifft eine Abschirmung gegen Laserstrahlen gemäß der Gattung des Hauptanspruches, die der US-A-5 516 998 zu entnehmen ist.
Wenn bei der Materialbearbeitung mit Laserstrahlen ein Werkstückbereich von einem Laserstrahl perforiert werden muß, beispielsweise beim Laserbohren, wird die Laserstrahlung in der Regel noch nach Perforierung des Werkstückbereiches mit voller Leistung eingeschaltet bleiben, mit der Folge, daß der Laserstrahl das zuvor im Werkstück erzeugte Loch duchsetzt und mit mehr oder weniger großer zerstörerischer Wirkung auf dahinterliegende Teile des Werkstückes oder der Materialbearbeitungsanlage auftreffen wird.

Selbst wenn die damit verbundenen Zerstörungen gering bzw. tolerierbar bleiben sollten, wird in der Regel an der Auftreffstelle des Laserstrahles zumindest eine geringe Menge Materials verdampft, welches dann zu Verschmutzungen auf der Rückseite des zuvor bearbeiteten Werkstückbereiches führen kann.

Aus der EP 0 768 140 A1 ist es grundsätzlich bekannt, vor dem Laserbohren in wandungen von Hohlkörpern in den Hohlkörper ein Abschirmmaterial einzubringen. Nach der vorgenannten Druckschrift sind als Abschirmmaterial mit Borverbindungen sowie einem Härter versetzte Acrylate vorgesehen, die in den Hohlraum eingefüllt werden und nach ihrer Aushärtung einen festen Kunststoffkern im zu bearbeitenden Hohlkörper bilden. Beim nachfolgenden Laserbohren wird dann der Laserstrahl durch die Bohrverbindungen im Kunststoffkörper destrukturiert, d.h. "gestoppt", so daß die in Strahlrichtung hinter dem Bohrloch liegenden Teile des Hohlkörpers nur noch mit geringer Energiedichte beaufschlagt werden können und damit gegen Beschädigungen durch den Laserstrahl geschützt sind. Später wird dann der Kunststoffkern aus dem Hohlkörper durch Pyrolyse entfernt.

Aus der JP 09 066381 A ist es bekannt, die Öffnungen von Einspritzdüsen durch Laserbohren zu erzeugen, wobei innenseitig der Einspritzdüsen ein Spiegel angeordnet wird, der den durch die zuvor erzeugte Düsenbohrung eintretenden Laserstrahl in Richtung eines offenen Endes der Einspritzdüse reflektiert.

### Vorteile der Erfindung

Die Erfindung beruht auf dem allgemeinen Gedanken, eine vom zu bearbeitenden Werkstückbereich getrennte bzw. entfernte Abschirmschicht aus einem Material einzusetzen, durch das der Laserstrahl innerhalb eines großen Volumens bzw. Lichtweges durch Streuung, Reflektion und/oder Absorption destrukturiert wird, und zwar derart, daß die im Abschirmmaterial auftretende Energiedichte gering bleibt, jedenfalls nicht bzw. nur in vernachlässigbarem Umfang zu Materialverdampfungen und damit einhergehenden Verschmutzungen des Werkstückes führt. Im Ergebnis erübrigen sich damit umfangreiche Maßnahmen zur Reinigung des Werkstückes bzw. zur Trennung von Werkstück und Abschirmung.

Erfindungsgemäß wird ein den Laserstrahl diffus reflektierendes Abschirmmaterial mit solchem Abstand von der Rückseite des zu bearbeitenden Werkstückbereiches angeordnet, daß die zum Werkstück hin reflektierte Laserstrahlung in Verbindung mit der vorangegangenen Erhitzung des bearbeiteten Werkstückbereiches durch den Laserstrahl eine Verrundung des Randes der erzeugten Öffnung auf der Werkstückrückseite bewirkt.

### Zeichnung

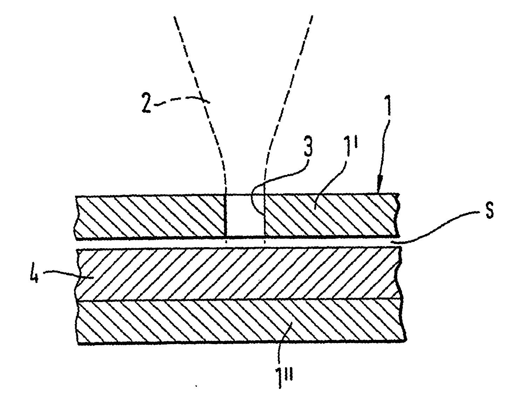

In der Zeichnung wird eine besonders bevorzugte Ausführungsform der Erfindung schematisiert dargestellt.

Dabei zeigt die einzige Figur ein Schnittbild eines Werkstückes beim Laserbohren, wobei innenseitig des Bohrloches eine Abschirmung gegen den Laserstrahl als Rückraumschutz angeordnet ist.

In der Zeichnung besitzt ein Werkstück 1 eine vorderseitige Wand 1' sowie eine davon beabstandete rückseitige Wand 1".

Im dargestellten Beispiel soll nun mittels eines Laserstrahles 2 in der vorderen Wand 1' eine Bohrung 3 erzeugt werden. Dazu wird der Laserstrahl 2 in grundsätzlich bekannter Weise auf den Bereich der zu erzeugenden Bohrung 3 fokussiert.

Um nun zu verhindern, daß der Laserstrahl 2 nach Druchdringung der vorderen Wand 1' mit mehr oder weniger großer Zerstörungswirkung auf die der Bohrung 3 zugewandte Seite der Wand 1" auftrifft, ist in Ausbreitungsrichtung des Laserstrahles 2 vor der Wand 1" eine plattenförmige Abschirmung 4 angeordnet.

Diese Abschirmung kann aus einem transparenten Material wie z.B. Polyalkylmethacrylat (PAMA), Polyamid (PA), Polytetrafluorethylen (PTFE) oder Epoxidharz bestehen, wobei in der durch die vorgenannten Materialien gebildeten Matrix kolloidale Füllstoffe zu einem Volumenanteil bis ca. 10 % enthalten sind, und zwar solche Füllstoffe, die wie Titandioxid (TiO₂) zu einer starken Streuung des einfallenden Laserstrahles führen.

Die mit der Streuung verbundene Reflektion des Lichtes des Laserstrahles 2 wird erfindungsgemäß zur Materialbearbeitung am inneren Stirnende der Bohrung 3 ausgenutzt. Da zwischen der Innenseite der mit der Bohrung 3 zu versehenden Vorderwand 1' und der dem Laserstrahl 2 zugewandten Seite der Abschirmung 4 ein schmaler Spalt S verbleibt, führt das reflektierte Licht des Laserstrahles 2 zu einer geringfügigen Aufschmelzung des Materials der Wand 1' am innenseitigen Stirnrand der Bohrung 3, d.h. dieser Rand wird entgratet und/oder verrundet.

Der kolloidale Füllstoff Titandioxid kann gegebenenfalls auch durch feine Glaskugeln im Durchmesserbereich von 10 bis 200 µm ersetzt werden.

Die Dichte der das Laserlicht streuenden Bestandteile der Abschirmung 4 soll einerseits so groß bemessen sein, daß der Laserstrahl 2 an der ihm zugewandten Seite der abgeschirmten Wand 1" nur noch eine geringe Energiedichte aufweist und dementsprechend nicht zu Veränderungen an der Wand 1" führen kann. Anderseits soll die Dichte der Streuzentren hinreichend gering sein, derart, daß der Laserstrahl 2 tiefer in die Abschirmung 4 eindringen kann und innerhalb eines vergleichsweise großen Volumens des Materials der Abschirmung 4 zerstreut wird. Damit ist gewährleistet, daß innerhalb des Materials der Abschirmung 4 nur begrenzte Energiedichten des Laserlichtes auftreten und Verdampfungen des Materials der Abschirmung 4 vermieden werden.

Gemäß einer anderen Ausführungsform der Erfindung kann die Abschirmung 4 auch aus einem das Laserlicht absorbierenden Material bestehen, etwa keramischen Materialien wie z.B. Al₂O₃, insbesondere in Form von Rubin und Saphir, AlN, Si₃N₄ oder ZrO. In derartigen Materialien wird der Laserstrahl 2 auf einer vergleichsweise großen Weglänge absorbiert, so daß innerhalb der Abschirmung wiederum keine übermäßigen Energiedichten und damit einhergehende Erhitzungen auftreten können.

Gegebenenfalls kann die Abschirmung 4 auch als optische Transmissionsstrecke angeordnet sein, durch die das Laserlicht weggeführt und beispielsweise zu einer Absorptions- oder Streuzone geleitet wird.

Zwar ist es in der Regel vorteilhaft, die Abschirmung als Festkörper auszubilden. Jedoch ist es auch möglich, mit gasförmigen oder flüssigen Abschirmungen zu arbeiten. Beispielsweise hat eine 5 bis 30%ige Boremulsion eine gute Schutzwirkung, so daß eine entsprechende Schicht als Abschirmung 4 verwendbar ist.

Gemäß einer besonders vorteilhaften Ausführungsform der Erfindung ist vorgesehen, den Spalt S zwischen der Rückseite des zu bearbeitenden Werkstückbereiches 1' und der zugewandten Seite der Abschirmung 4 mit einem Prozeß- oder Schutzgas bzw. einem Prozeß- und Schutzgasgemisch zu füllen. Dieses Gas kann während der Laserbearbeitung des Werkstückbereiches 1' durch den Spalt S strömen oder im Spalt S "stehen". Sobald der Laserstrahl 2 den Werkstückbereich 1' bei der Werkstückbearbeitung perforiert hat, wird in der Gasschicht ein Plasma erzeugt, welches eine Stoßfront bildet und das Laserlicht ab einer bestimmten Zeit stark absorbiert. Dadurch wird die Wechselwirkung der Laserstrahlung mit dem Material der Abschirmung 4 vermindert, d.h. die Abschirmung 4 wird geschont und kann somit länger in Benutzung bleiben. Außerdem kommt es zu geringeren Schmutzablagerungen im Raum hinter dem bearbeiteten Werkstückbereich 1'. Darüber hinaus bewirkt das entstehende Plasma eine verbesserte Verrundung der der Abschirmung 4 zugewandten rückseitigen Öffnung der Bohrung 3.

Je nach eingesetztem Gas entsteht ein Plasma mit einer dem jeweiligen Gas zuzuordnenden Plasmatemperatur.

Falls die Abschirmschicht 4 aus Al₂O₃ besteht, hat sich der Einsatz von Argon als vorteilhaft erwiesen.

Die Erfindung läßt sich mit großem Vorteil bei der Erzeugung der Spritzlöcher einer Dieseleinspritzdüse für Dieselmotoren einsetzen.

## Patentansprüche

1. Verfahren zum Erzeugen einer Bohrung (3) in einem Werkstück (1) mittels eines Laserstrahls (2), bei dem im Bereich des Bohrungsaustritts eine Abschirschicht (4) angeordnet ist, deren Material den Laserstrahl (2) innerhalb eines großen Volumens bzw. Lichtweges durch Streuung, Reflektion und/oder Absorption Destrukturiert, wobei die Abschirschicht (4) in Strahlrichtung des Laserstrahls (2) hinter dem zu bohrenden Werkstückbereich (1') mit Abstand angeordnet ist, **dadurch gekennzeichnet, daß** die Abschirmschicht derart angeordnet ist, dass die reflektierte Laserstrahlung eine Entgratung und/oder Verrundung einer der Abschirschicht (4) zugewandten Kante der von dem Laserstrahl (2) erzeugten Bohrung (3) bewirkt.

2. Verfahren nach Anspruch 1, **dadurch gekennzeichnet, dass** das Abschirmelement (4) aus keramischem Material besteht, welches den Lasertrahl auf größerer Lichtweglänge absorbiert.

3. Verfahren nach Anspruch 2, **dadurch gekennzeichnet, dass** das keramische Material des Abschirmelements (4) aus AL₂O₃, AlN, Si₃N₄ und/oder ZrO besteht.

4. Verfahren nach Anspruch 1, **dadurch gekennzeichnet, dass** das Abschirmelement (4) aus einem transparenten Material mit lichtstreuenden Füllstoffen besteht.

5. Verfahren nach Anspruch 4, **dadurch gekennzeichnet, dass** das transparente Material aus Polyalkylmethacrylat, Polytetrafluorethylen, Polyamid und/oder Epoxidharz besteht.

6. Verfahren nach einem der Ansprüche 1 bis 5, **dadurch gekennzeichnet, dass** ein kolloidaler Füllstoff in dem Abschirmelement (4) enthalten ist,

7. Verfahren nach Anspruch 6, **dadurch gekennzeichnet, dass** der kolloidale Füllstoff Titandioxid enthält.

8. Verfahren nach einem der Ansprüche 1 bis 7, **dadurch gekennzeichnet, dass** das Abschirmelement (4) Glaskugeln im Durchmesserbereich von etwa 10 bis 200 µm enthält.

9. Verfahren nach einem der Ansprüche 1 bis 8, **dadurch gekennzeichnet, dass** zwischen dem Abschirmelement (4) und der Rückseite des zu bearbeitenden Werkstückbereiches (1') ein Prozeß- oder Schutzgas oder ein Prozeß- und Schutzgasgemisch vorhanden ist oder hindurchströmt.

## Claims

1. Method of producing a hole (3) in a workpiece (1) by means of a laser beam (2), in which, in the region of the outlet of the hole, there is arranged a shielding layer (4) whose material destroys the structure of the laser beam (2) within a large volume or light path by means of scattering, reflection and/or absorption, the shielding layer (4) being arranged, in the beam direction of the laser beam (2), at a distance behind the region (1') of the workpiece to be drilled, **characterized in that** the shielding layer is arranged in such a way that the reflected laser radiation effects deburring and/or rounding of an edge, of the hole (3) produced by the laser beam (2), which faces the shielding layer (4).

2. Method according to Claim 1, **characterized in that** the shielding element (4) consists of ceramic material which absorbs the laser beam over a relatively large optical path length.

3. Method according to Claim 2, **characterized in that** the ceramic material of the shielding element (4) consists of Al₂O₃, AlN, Si₃N₄ and/or ZrO.

4. Method according to Claim 1, **characterized in that** the shielding element (4) consists of a transparent material with light-scattering fillers.

5. Method according to Claim 4, **characterized in that** the transparent material consists of polyalkyl methacrylate, polytetrafluoroethylene, polyamide and/or epoxy resin.

6. Method according to one of Claims 1 to 5, **characterized in that** a colloidal filler is contained in the shielding element (4).

7. Method according to Claim 6, **characterized in that** the colloidal filler contains titanium dioxide.

8. Method according to one of Claims 1 to 7, **characterized in that** the shielding element (4) contains glass spheres in the diameter range from about 10 to 200 µm.

9. Method according to one of Claims 1 to 8, **characterized in that** a process or inert gas or a process and inert gas mixture is present or flows through between the shielding element (4) and the rear of the region (1') of the workpiece to be machined.

## Revendications

1. Procédé pour produire un alésage (3) dans une pièce (1) au moyen d'un rayon laser (2), selon lequel dans la zone de sortie de l'alésage est disposée une couche (4) formant écran dont le matériau déstructure le rayon laser (2) à l'intérieur d'un grand volume ou d'un grand parcours de lumière par diffusion, réflexion et/ou absorption, la couche (4) formant écran étant disposée dans la direction du rayon laser (2) derrière la zone (1') à aléser dans la pièce et à une certaine distance de celle-ci,
**caractérisé en ce que**
le rayon laser réfléchi ébarbe et/ou arrondit un bord de l'alésage produit par le rayon laser situé en regard de la couche (4) formant écran.

2. Procédé selon la revendication 1,
**caractérisé en ce que**
l'élément (4) formant écran est fait d'un matériau céramique qui absorbe le rayon laser sur une assez grande longueur de parcours du rayon.

3. Procédé selon la revendication 2,
**caractérisé en ce que**
le matériau céramique de l'élément (4) formant écran est constitué de Al₂O₃, AIN, Si₃N₄ et/ou ZrO.

4. Procédé selon la revendication 1,
**caractérisé en ce que**
l'élément (4) formant écran est constitué d'un élément transparent contenant des matières de remplissage diffusant la lumière.

5. Procédé selon la revendication 4,
**caractérisé en ce que**
le matériau transparent est un polyalkylmethacrylate, un polytetrafluorethylène, une polyamide et/ou une résine epoxy.

6. Procédé selon une des revendications 1 à 5,
**caractérisé en ce que**
l'élément (4) formant écran contient une matière de remplissage colloïdale.

7. Procédé selon la revendication 6,
**caractérisé en ce que**
la matière de remplissage colloïdale est du dioxyde de titane.

8. Procédé selon une des revendications 1 à 7,
**caractérisé en ce que**
l'élément (4) formant écran contient des billes de verre d'un diamètre de 10 à 200 µm environ.

9. Procédé selon une des revendications 1 à 8,
**caractérisé en ce que**
entre l'élément (4) formant écran et la face arrière de la zone (1') à usiner dans la pièce se trouve ou circule un gaz de processus ou de protection ou un mélange de tels gaz.
